# FASCICULE DE BREVET EUROPEEN

(11) **EP 1 054 284 B1**
(45) Date de publication et mention de la délivrance du brevet: **07.09.2005**
(21) Numéro de dépôt: 00401385.0
(22) Date de dépôt: 19.05.2000
(51) Int. Cl.: G02B 23/24

(54) **Dispositif de visualisation par caméra numérique miniature**
Sichtgerät mit digitaler Mikrokamera
Vision device with digital micro-camera

(30) Priorité: 21.05.1999 FR 9906497
(43) Date de publication de la demande: 22.11.2000
(73) Titulaire: Renault s.a.s., 92100 Boulogne Billancourt (FR)
(72) Inventeur: Nguyen, Hoang Giang, 91130 Ris-Orangis (FR)

(56) Documents cités:
- EP-A- 0 421 893
- EP-A- 0 587 514
- WO-A-94/23539
- FR-A- 2 737 650
- US-A- 4 491 865
- US-A- 4 905 082
- US-A- 5 233 426
- US-A- 5 373 317
- US-A- 5 389 968
- US-A- 5 588 950

## Description

La présente invention concerne un dispositif de visualisation par caméra numérique, à tête miniaturisée flexible et orientable, de type endoscope, pour l'inspection des zones non accessibles d'un organe, en particulier d'un moteur de véhicule automobile.

Actuellement, l'inspection des organes et du moteur d'un véhicule automobile de conception moderne est rendue difficile à cause de la compacité du moteur lui-même et du volume réduit du compartiment moteur sous le capot du véhicule. Aussi, lors de certaines pannes, le réparateur doit démonter des pièces annexes autour du moteur pour accéder visuellement à des parties cachées à examiner. Ces opérations de démontage allongent le temps de recherche des pannes, qui n'est pas inclus dans le temps d'intervention facturé au client.

Une solution pour réduire le temps de détermination d'une panne, donc le temps d'intervention non facturé, consiste à permettre au réparateur de visualiser directement et immédiatement l'organe en panne, sans démonter les organes annexes. Or, actuellement, il n'existe pas de système de vision directe par caméra miniature dans le domaine de l'après-vente automobile.

Le document EP-A-0 421 893 décrit un endoscope compact et portable, utilisé pour fournir des images vidéo d'objets inaccessibles. Cet endoscope comprend un moteur de commande relié à chaque paire de câble de commande, un circuit de contrôle de variateur de lumière relié à la lampe et aux capteurs d'images, un circuit microprocesseur d'images couplé au capteur d'images qui convertit le signal vidéo en format d'affichage et une batterie d'alimentation.

Dans la demande de brevet français publiée sous le FR 2 775 151, au nom de Renault, est décrit un dispositif de visualisation directe par caméra numérique de type CMOS (Complementary Metal Oxyde Semi-conductor), implantée dans un corps creux d'une torche solidaire d'un tube cylindrique flexible et articulé, de faible diamètre, fixé à un manche rigide comprenant une commande d'éclairage et une commande de mouvement de la tête logeant la caméra, et d'autre part d'un écran de visualisation, en technologie LCD. (Liquid Cristal Display) par exemple.

Un problème vient du fait que le mode de montage de cette caméra CMOS ou CCD (Charge Coupled Device) ne permet pas de réaliser une torche dont le diamètre est inférieur à 12 mm, en raison de la taille de la carte imprimée constituant ce type de caméra, de diamètre avoisinant les 25 mm. En effet, pour des raisons de coût de production de l'outil de diagnostic vidéo, on utilise des caméras CCD ou CMOS sur carte imprimée, sur laquelle sont connectés :
- le capteur d'image CCD ou CMOS proprement dit ;
- le circuit électronique de pilotage des phases d'horloge nécessaires au fonctionnement de ce capteur ;
- le circuit électronique de traitement du signal vidéo.

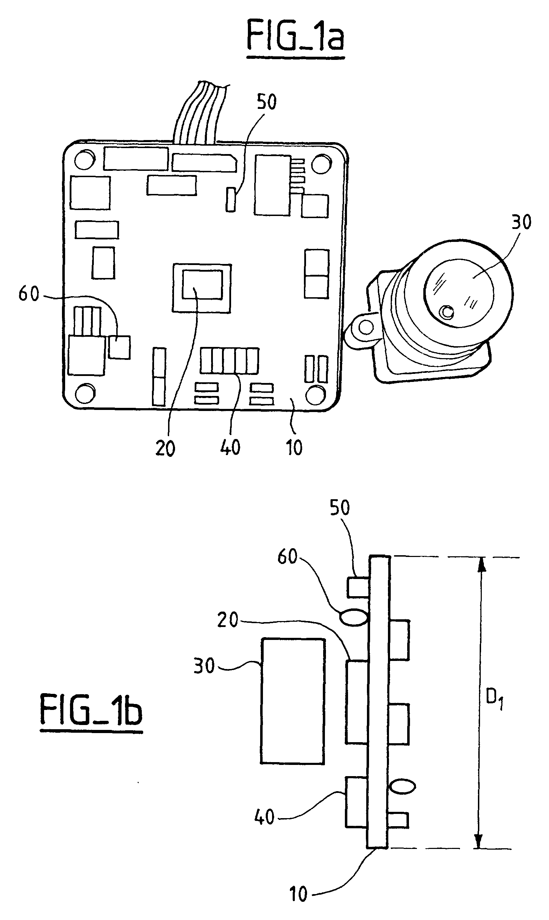

Les figures 1ₐ et 1_{b} sont respectivement une vue de face et une vue schématique en coupe d'une caméra CCD ou CMOS de type carte imprimée comprenant, sur un circuit imprimé 10, un capteur 20 d'image CCD ou CMOS devant lequel est placé un objectif 30, un circuit intégré 40 et au moins une résistance 50 et une capacité 60. Dans ce mode de réalisation, le circuit de pilotage dans le circuit intégré est près du capteur. Si on déporte le capteur CCD de son électronique de traitement volumineuse, on reste obligé de disposer des circuits imprimés de pilotage près du capteur, ce qui augmente le coût du dispositif de visualisation. Les dimensions de la carte imprimée 10, de largeur D₁, sont souvent grandes et déterminent le diamètre final de la tête de la torche.

L'éclairage peut être obtenu, comme cela est décrit dans la demande de brevet précitée, par des diodes ou des lampes déportées au niveau du capteur CCD ou CMOS. Pour résoudre les problèmes de dissipation thermique, on prévoit des ponts thermiques.

Une solution au problème du diamètre final de la torche vidéo consisterait à déporter le capteur loin de son circuit électronique de traitement, comme cela est décrit dans le brevet US 5 233 426 de Matsushita Electric, mais dans ce cas, plusieurs problèmes se poseraient en plus, notamment la phase d'horloge de pilotage du capteur CCD et la chute de la tension d'alimentation au niveau du capteur CCD. Pour les résoudre, les circuits de pilotage sont placés derrière le capteur CCD avec des circuits imprimés supplémentaires, alors que des connecteurs miniatures sont placés au niveau de la tête d'endoscope. Cette solution est complexe à réaliser, accroît l'épaisseur de la tête d'endoscope donc son encombrement et est onéreuse.

Le brevet US 5 389 968 de Yugengaisha décrit une caméra CCD de télévision dont la tête et les circuits de pilotage sont déportés du circuit de traitement principal. Des circuits générateurs de tension électrique nécessaires au fonctionnement du capteur CCD sont déportés également près du capteur et l'horloge de pilotage des transferts de charges est superposée au canal d'alimentation par couplage via un transformateur de tension. Cette solution est volumineuse et onéreuse.

Le but de l'invention est de pallier ces différents inconvénients en proposant un dispositif de type endoscope, avec une caméra numérique de petite taille, dont le coût total de l'outil et de sa maintenance en après-vente est réduit.

Pour cela, l'objet de l'invention est un dispositif de visualisation par caméra numérique, de type endoscope, constitué d'une part d'une caméra numérique miniature de type CCD ou CMOS ou CMOS-APS, implantée dans une torche et d'autre part d'un écran de visualisation des images produites par la caméra, caractérisé en ce que :
- dans le corps creux de la tête de la torche est logé le capteur d'images de la caméra ;
- dans le manche non conducteur de la torche sont déportés d'une part les moyens de traitement électronique et de pilotage d'horloge de la caméra numérique, et d'autre part les moyens d'éclairage de la scène à visualiser ;
- dans le tube flexible non conducteur, reliant la tête de la torche à son manche, sont protégés les câbles électriques blindés de liaison entre le capteur d'images et ses moyens de traitement, ainsi que des moyens de guidage de la lumière émise par des moyens d'éclairage vers la tête de la torche,
et en ce que des moyens de compensation des phases d'horloge du capteur d'image sont ajoutés aux extrémités des fils électriques de liaison entre le capteur et ses moyens de traitement, la compensation des phases d'horloge du capteur d'image étant assurée par des composants passifs, de type capacité ou inductance, reliés par soudure aux pattes de connexion du capteur d'images.

Selon une autre caractéristique de l'invention, les moyens d'éclairage de la scène à visualiser sont constitués par une lampe, incandescente ou halogène, unique, ou par une diode électroluminescente, placée dans le manche de la torche, et associée à des moyens de guidage de la lumière constitués par un faisceau de fibres optiques, en plastique par exemple.

D'autres caractéristiques et avantages de l'invention apparaîtront à la lecture de la description d'un exemple de réalisation d'un dispositif de visualisation, illustrée par les figures suivantes qui, outre les figures 1ₐ et 1_{b} déjà décrites, sont :
- la figure 2 : une vue complète d'un dispositif de visualisation avec écran selon l'invention ;
- les figures 3 et 4 : deux variantes de réalisation d'une caméra de torche vidéo, en coupe schématique longitudinale selon le premier mode de réalisation de l'invention ;
- la figure 5 : un schéma d'une caméra d'une tête de torche vidéo, selon un deuxième mode de réalisation de l'invention ;
- la figure 6 : une vue en coupe longitudinale d'un dispositif de visualisation selon l'invention.

Les éléments portant les mêmes références sur les différentes figures remplissent les mêmes fonctions en vue des mêmes résultats.

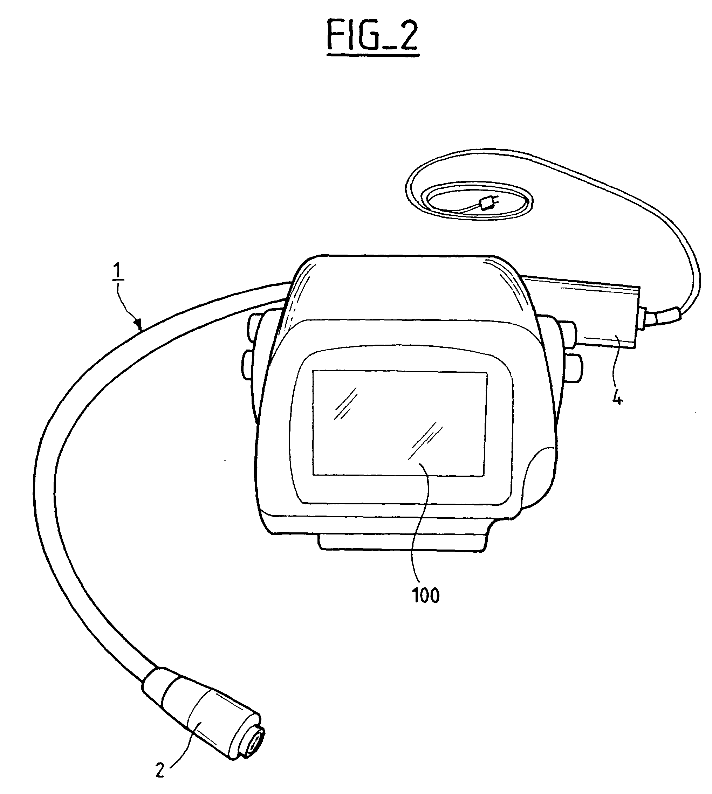

Le dispositif de visualisation directe par caméra numérique miniature, de type endoscope, est constitué d'une part d'une caméra numérique de type CCD ou CMOS ou CMOS-APS (Active Pixel Sensor), implantée dans une torche 1 et d'autre part d'un écran de visualisation 100 des images produites par la caméra qui est de type à cristaux liquides par exemple , comme le montre la figure 2, ou à tube cathodique. Il se caractérise par le déport du seul capteur d'image CCD ou CMOS dans la tête 2 de torche, alors que son électronique de traitement est situé dans le manche 4, les phases d'horloge devant être compensées notamment par des composants passifs, de type condensateur ou self, réalisés soit dans la technologie des composants à montage en surface, soit dans la technologie des composants discrets.

Pour réaliser un endoscope vidéo destiné au diagnostic automobile, il faut qu'il présente une tête de taille minimale d'une part pour se glisser aisément entre les pièces du moteur, et que soit résolu l'éclairage au niveau de la tête de la torche.

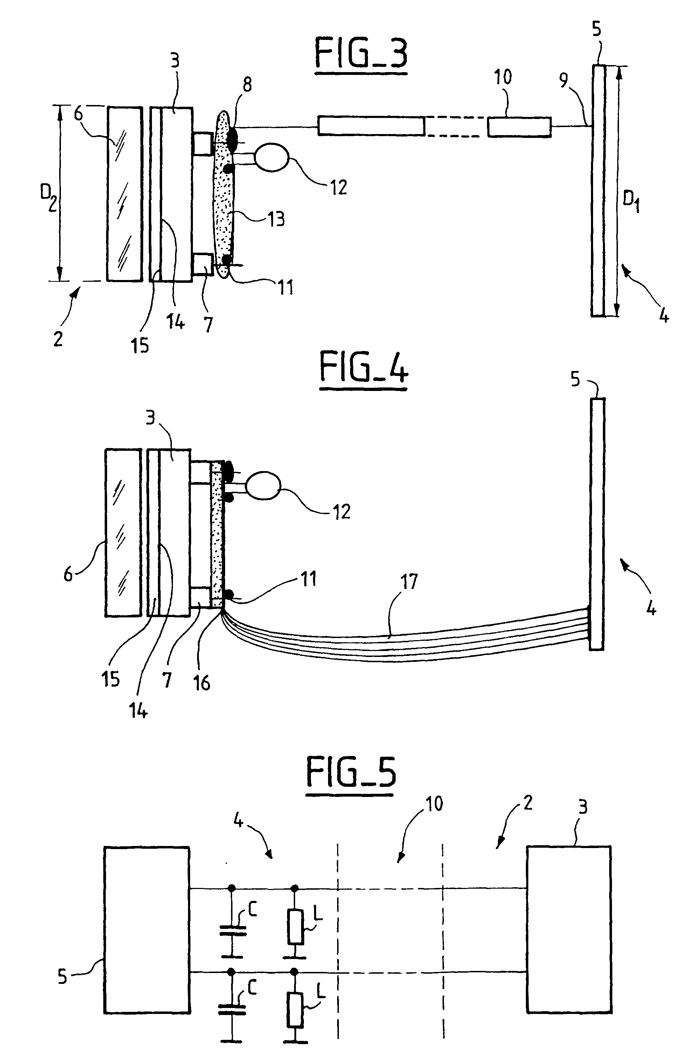

La solution proposée au problème de la taille minimale de la tête 2 de la torche vidéo 1 consiste, au niveau de la caméra numérique, à séparer le circuit 3 capteur d'image CCD ou CMOS du circuit imprimé 5 qui comprend le circuit électronique de pilotage et le circuit électronique de traitement du signal vidéo, comme le montre la figure 3 qui est un schéma en coupe longitudinale d'une caméra numérique selon un premier mode de réalisation du dispositif de visualisation. Ainsi, le capteur d'image numérique 3 et son objectif 6 sont logés dans la tête 2 pendant que l'électronique de traitement est logé dans le manche 4 du dispositif.

En raison de l'objectif 6 de la caméra mis devant le capteur d'images 3 en noir et blanc ou en couleurs, le diamètre extérieur D₂ de la tête 2 est légèrement supérieur à celui du capteur d'image, mais est très inférieur aux dimensions, notamment la largeur D₁ de la carte imprimée 5.

L'objectif, qu'il soit asservi ou non, a pour fonction de former des images de la scène à observer sur la surface sensible du capteur CCD. Il peut être du type «*pin hole*» ou simple lentille avec une ouverture numérique très faible pour bénéficier de la grande profondeur de champ.

Les pattes 7 de connexion du circuit capteur d'images 3 ne sont plus directement soudées sur le circuit imprimé 5, mais chacune est soudée à l'étain à une première extrémité 8 d'un fil électrique 10, dont la seconde extrémité 9 est connectée au circuit imprimé de l'électronique de traitement du signal vidéo, placé dans le manche 4 de la torche. Les soudures à l'étain sont référencées 11.

Ces fils électriques 10 doivent avoir une faible résistivité linéaire et leur longueur maximale 1 entre la tête 2 et le manche 4 du dispositif doit être inférieure à 30 cm pour les capteurs en couleur, ou 60 cm pour les capteurs en noir et blanc, ce qui est tout à fait suffisant pour une application de torche vidéo de type endoscope.

Pour compenser les phases d'horloge, des composants passifs 12, de type capacité ou inductance, sont reliés par soudure aux pattes 7 de connexion du capteur d'images 3. Pour assurer la rigidité de l'ensemble de ces connexions, ses pattes de connexion sont moulées dans une résine 13 isolante, excepté sur sa face sensible 14 en silicium, qui est scellée sous un gaz rare par une couche de verre 15 évitant son oxydation, et sur l'objectif.

Dans une variante représentée schématiquement sur la figure 4, les composants passifs 12, de type capacité ou inductance, sont connectés sur un support flex-rigide 16, sur lequel est soudé préalablement le circuit 3 capteur d'image. Ce support flex-rigide 16 peut être connecté à un faisceau 17 de fils électriques noyés dans un ruban de Kevlar ou Kapton, en remplacement d'un toron de fils électriques 10.

Une telle réalisation s'adapte particulièrement bien à une production en grand nombre d'endoscope vidéo à bas coût.

Selon un exemple illustratif d'une caméra numérique représentée schématiquement sur la figure 5, on peut disposer les composants passifs de correction de phases d'horloge sur la carte imprimée 5 logée dans le manche 4 du dispositif de vision. Cette solution est également possible car la distance maximale du déport entre le capteur d'images 3 et les circuits électroniques de pilotage et de traitement placés sur la carte imprimée 5, donc la longueur des câbles c'est-à-dire des fils électriques de liaison 10 gainés, est voisine de 30 cm pour un capteur en couleur et 60 cm pour un capteur en noir et blanc. Sur le circuit imprimé sont soudées des capacités C et des inductances L de compensation des signaux de pilotage d'horloge, pour l'acquisition et la lecture du signal vidéo.

Le toron de câbles 10 de liaison des signaux d'horloge est blindé électromagnétiquement par une gaine métallique 18, en forme de tresse par exemple, reliée à la masse électrique et/ou à la masse mécanique du circuit imprimé 5 et du capteur d'images 3.

Dans ces exemples de la caméra utilisant des câbles électriques, il est nécessaire d'utiliser des câbles multibrins simples, à très faible résistivité linéaire, de l'ordre de 0,002 Ohm par mètre, pour éviter les problèmes de chute de tension d'alimentation au niveau du capteur CCD.

Cela implique une légère augmentation de la taille du toron torsadé qui relie le capteur d'image 3 à la carte imprimée 5.

Sur certaines phases d'horloge du capteur d'images, la simple liaison par câble électrique de faible résistivité linéaire, entre la patte de connexion du capteur et le circuit imprimé, suffit pour assurer le bon fonctionnement du capteur, surtout dans le cas d'un capteur monochrome en noir et blanc.

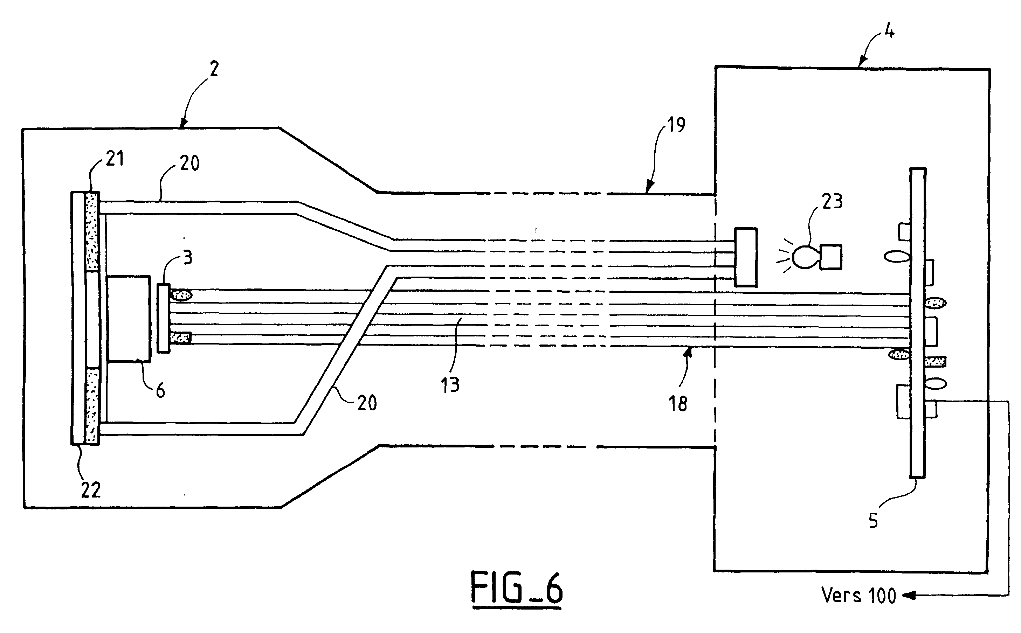

La figure 6 est un schéma complet en coupe longitudinale de la torche d'un dispositif de visualisation selon l'invention, composé d'une tête 2 rigide reliée à un manche 4 par un tube flexible 19, de diamètre inférieur à celui du corps creux de la tête. Le tube flexible 19 est réalisé en plastique pour éviter tout problème de court-circuit électrique pendant la recherche de panne par l'outil de diagnostic, et le manche 4 est constitué d'un tube métallique rigide pour faciliter le maniement de la torche et plastifié pour son isolation électrique. La tête de la torche, dans laquelle est logé le capteur d'image 3, est réalisée à partir d'un corps creux métallique, généralement cylindrique ou tronconique, rigide pour protéger le capteur d'images, mais recouvert d'un matériau non conducteur, tel que du plastique, pour son isolation électrique.

La solution proposée pour l'éclairage de la scène à observer au moyen de la tête du dispositif de visualisation, sans augmenter le volume de la tête de la torche, consiste à loger les moyens d'éclairage dans le manche 4, et non pas dans la tête 2.

Ces moyens sont par exemple une lampe 23, incandescente ou halogène, unique, placée dans le manche 4, associée à des moyens de guidage de la lumière. Ce peut être aussi une diode électroluminescente.

La lampe doit être d'un coût et d'une consommation électrique faibles. L'intérêt de la mettre dans le manche de la torche réside dans la facilité de remplacement en cas de défaillance, dans les services d'après-vente du réseau automobile qui peuvent assurer la maintenance du dispositif vidéo.

La lumière émise par cette lampe 23 est guidée par un faisceau de fibres optiques 20, en plastique par exemple, vers la tête 2 de la torche. On peut utiliser 2 ou 4 fibres à très bas coût. La lampe 23 est placée à l'entrée des fibres optiques du faisceau, le couplage dans l'air suffisant à transporter la lumière via les fibres vers la tête. Ce couplage dans l'air est simple et le changement de lampe, lorsque celle-ci est grillée, est très aisé, ce qui ne serait pas le cas avec un couplage par résine.

L'autre extrémité de chacune des fibres optiques est plaquée contre un anneau 21 en polymère diffusant, du type PMMA - Poly-Méthacrylate de Méthyle - non transparent, ce qui permet d'obtenir un éclairage diffus de type Lambertien dans le champ de vision de la caméra numérique. Si les fibres optiques sont au nombre de deux, leurs extrémités respectives sont diamétralement opposées, sinon elles sont réparties symétriquement par rapport au centre, soit à 90° si elles sont quatre par exemple, comme le montre la figure 2. Au centre percé de cet anneau 21 est placé l'objectif 6 du capteur d'images 3, de type pin hole ou lentille simple à faible ouverture numérique. Une plaque 22 circulaire, en polymère transparent, est collée sur l'extrémité de la tête 2 de la torche pour assurer l'étanchéité totale de cet outil de diagnostic ainsi réalisé.

La plage de longueur d'ondes utilisée pour le capteur CCD, ou CMOS, et les moyens d'éclairage peut être dans le spectre visible ou infrarouge ou ultraviolet.

Dans une version d'une utilisation en mode autonome, la source d'alimentation électrique est de type pile, batterie ou accumulateur rechargeable, située dans le manche 4 ou dans le boîtier de l'écran de visualisation 100.

Dans une autre version en mode non autonome, le dispositif vidéo est alimenté à partir d'une baie de télédiagnostic, via le réseau d'électricité en 110 ou 220 Volts.

Les moyens de mise en marche de la torche du dispositif sont placés sur le manche 4, ainsi que des moyens d'éclairage nécessaires au capteur d'images.

Un tel dispositif de visualisation selon l'invention sera avantageusement utilisé comme outil de diagnostic de pannes dans les véhicules automobiles, notamment au niveau du moteur. Cet outil permet de diminuer le temps de recherche de panne, c'est-à-dire de démontage et de remontage non facturé au client.

Il peut être utilisé dans des opérations du type :
- lecture directe des références de pièces non accessibles à l'oeil du garagiste ;
- recherche de fuite de liquide de frein, d'huile de la boîte de vitesse, d'huile du moteur ou du circuit de refroidissement ;
- recherche de points de corrosion dans les ailes de la carrosserie ou au niveau du passage de roues ;
- recherche de défaut d'étanchéité ;
- recherche de chemin de câbles électriques dans le tableau de bord ;
- recherche de pannes électriques dans les circuits de ventilation.

De plus, cet outil de diagnostic par endoscope vidéo a un coût très faible, permettant une grande diffusion non seulement dans le secteur automobile, mais encore en aéronautique ou dans le secteur des machines industrielles.

## Revendications

1. Dispositif de visualisation par caméra numérique, de type endoscope, constitué d'une part d'une caméra numérique miniature a circuit imprimé, implantée dans une torche et d'autre part d'un écran de visualisation (100) des images produites par la caméra,
le dispositif ayant les caractéristiques suivantes:
- dans le corps creux de la tête (2) de la torche (1) est logé le capteur d'images (3) de la caméra;
- dans le manche (4) non conducteur de la torche sont déportés d'une part les moyens (5) de traitement électronique et de pilotage d'horloge de la caméra numérique, et d'autre part les moyens d'éclairage (23) de la scène à visualiser;
- dans le tube flexible (19) non conducteur reliant la tête (2) de la torche à son manche (4) sont protégés les câbles électriques (10) blindés de liaison entre le capteur d'images (3) et ses moyens de traitement (5), ainsi que des moyens de guidage (20) de la lumière émise par lesdits moyens d'éclairage vers la tête (2) de la torche (1),
- des moyens de compensation des phases d'horloge du capteur d'image (3) déporté sont ajoutés aux extrémités des fils électriques (10) de liaison, entre le capteur (3) et ses moyens de traitemernt (5), la compensation des phases d'horloge du capteur d'image (3) étant assuré par des composants passifs (12),
le dispositif étant **caractérisé en ce que**:
lesdits composants passifs (12) sont de type capacité ou inductance et reliés par soudure aux pattes (7) de connexion du capteur d'images (3).

2. Dispositif de visualisation selon la revendication 1, **caractérisé en ce que** chacune des pattes (7) de connexion du circuit capteur d'images (3), logé dans la tête (2) de la torche, est directement soudée à une première extrémité (8) d'un câble électrique (10) de liaison, dont la seconde extrémité (9) est connectée au circuit imprimé (5) de l'électronique de traitement du signal vidéo, placé dans le manche (4) de la torche.

3. Dispositif de visualisation selon la revendication 1 ou 2, **caractérisé en ce que**, pour assurer la rigidité de l'ensemble des connexions entre les pattes du capteur d'image (3) et d'une part les fils de liaison (10), et d'autre part les composants passifs (12), les pattes de connexion sont moulées dans une résine (13) isolante, excepté sur sa face sensible (14) en silicium, qui est scellée sous un gaz rare par une couche de verre (15) évitant son oxydation, et sur l'objectif.

4. Dispositif de visualisation selon la revendication 1 ou 2, **caractérisé en ce que** les composants passifs (12) de compensation, de type capacité ou inductance, sont connectés sur un support flex-rigide (16), sur lequel est soudé préalablement le circuit (3) capteur d'image et qui est connecté à un faisceau (17) de fils électriques noyés dans un ruban de Kevlar ou Kapton et connectés au circuit imprimé (5) de la caméra dans le manche (4) de la torche.

5. Dispositif de visualisation selon l'une quelconque des revendications précédentes, **caractérisé en ce que** les câbles électriques de liaison (10) sont des câbles simples multibrins, à très faible résistivité linéaire, de l'ordre de 0,002 Ohm par mètre, pour éviter les chutes de tension d'alimentation au niveau du capteur d'image (3) de la caméra.

6. Dispositif de visualisation selon la revendication 5, **caractérisé en ce que** le toron de câbles (10) de liaison des signaux d'horloge est blindé électromagnétiquement par une gaine métallique (18), en forme de tresse par exemple, reliée à la masse électrique et/ou à la masse mécanique du circuit imprimé (5) et du capteur d'images (3).

7. Dispositif de visualisation selon l'une quelconque des revendications précédentes, **caractérisé en ce que** les moyens d'éclairage sont constitués par une lampe (23), incandescente ou halogène, unique, ou par une diode électroluminescente, placée dans le manche (4) de la torche, et associée à des moyens de guidage de la lumière.

8. Dispositif de visualisation selon la revendication 7, **caractérisé en ce que** les moyens de guidage de la lumière, émise par la lampe (23) vers la tête (2) de la torche, sont constitués par un faisceau d'au moins deux fibres optiques (20), en plastique par exemple, la lampe (19) étant placée à l'entrée des fibres optiques du faisceau, auquel elle est couplée par un couplage dans l'air.

9. Dispositif de visualisation selon la revendication 8, **caractérisé en ce que** les extrémités respectives de chacune des fibres optiques, opposée à la lampe (23), sont plaquées contre un anneau (21) en polymère diffusant, du type PMMA - Poly-Méthacrylate de Méthyle - non transparent, destiné à fournir un éclairage diffus de type Lambertien dans le champ de vision de la caméra numérique, symétriquement par rapport au centre percé de l'anneau, dans lequel est placé l'objectif (6) du capteur d'images (3), et **en ce qu'**une plaque (22) circulaire, en polymère transparent, est collée sur l'extrémité de la tête (2) de la torche.

10. Dispositif de visualisation selon l'une quelconque des revendications précédentes, **caractérisé en ce que** :
- la tête (2) de la torche, dans laquelle est logé le capteur d'image (3), est réalisée à partir d'un corps creux métallique rigide pour protéger le capteur d'images, et recouvert d'un matériau non conducteur, tel que du plastique, pour son isolation électrique,
- le tube flexible (19) reliant ladite tête à un manche (4), est de diamètre inférieur à celui de la tête et réalisé en plastique pour éviter tout court-circuit électrique pendant la recherche de panne par l'outil de diagnostic, et
- le manche (4) est constitué d'un tube métallique rigide et plastifié pour son isolation électrique.

11. Dispositif de visualisation selon l'une des revendications 1 à 10, **caractérisé en ce que** la caméra numérique miniature est de type CCD ou CMOS ou CMOS-APS.

## Patentansprüche

1. Visualisierungsvorrichtung mit Digitalkamera, vom endoskopischen Typ, welche zum einen Teil aus einer digitalen Miniaturkamera mit gedrucktem Schaltkreis, die in eine Lampe eingesetzt ist, und zum anderen Teil aus einem Bildschirm (100) zur Anzeige der von der Kamera erzeugten Bilder besteht,
wobei die Vorrichtung die folgenden Eigenschaften aufweist:
- im hohlen Körper des Kopfes (2) der Lampe (1) ist der Bildsensor (3) der Kamera untergebracht;
- im nicht-leitenden Schaft (4) der Lampe sind einerseits die Mittel (5) zur elektronischen Verarbeitung und zur Steuerung des Zeitgebers der digitalen Kamera und andererseits die Mittel (23) zur Beleuchtung der anzuzeigenden Szene ausgelagert;
- in dem flexiblen, nicht-leitenden Schlauch (19), der den Kopf (2) der Lampe mit deren Schaft (4) verbindet, sind die geschirmten elektrischen Kabel (10) zur Verbindung des Bildsensors (3) und seiner Verarbeitungsmittel (5) geschützt, sowie Mittel (20) zur Führung des durch die Beleuchtungsmittel ausgesandten Lichtes zum Kopfe (2) der Lampe (1),
- Mittel zum Ausgleich der Phasen des Zeitgebers des ausgelagerten Bildsensors (3) sind den Enden der elektrischen Verbindungskabel (10) zwischen dem Sensor (3) und dessen Verarbeitungsmittel (5) hinzugefügt, wobei der Ausgleich der Phasen des Zeitgebers des Bildsensors (3) durch passive Bauteile (12) sichergestellt wird,
wobei die Vorrichtung **dadurch gekennzeichnet ist, dass**:
die passiven Bauteile (12) von einem kapazitiven oder induktiven Typ sind und über Lötstellen mit den Verbindungsbeinchen (7) des Bildsensors (3) verbunden sind.

2. Visualisierungsvorrichtung nach Anspruch 1, **dadurch gekennzeichnet, dass** ein jedes der Verbindungsbeinchen (7) des im Kopf (2) der Lampe untergebrachten Bildsensorschaltkreises (3) direkt an ein erstes Ende (8) eines elektrischen Verbindungskabels (10) angelötet ist, dessen zweites Ende (9) mit dem gedruckten Schaltkreis (5) der Elektronik zur Videosignalverarbeitung verbunden ist, welcher Schaltkreis im Schaft (4) der Lampe eingesetzt ist.

3. Visualisierungsvorrichtung nach Anspruch 1 oder 2, **dadurch gekennzeichnet, dass** zur Sicherstellung der Steifheit der Gesamtheit der Verbindungen zwischen den Beinchen des Bildsensors (3) und einerseits den Verbindungskabeln (10) und andererseits den passiven Bauteilen (12) die Verbindungsbeinchen in einem isolierenden Harz (13) eingegossen sind, ausgenommen auf deren empfindlichen Siliziumfläche (14), die durch eine Glasschicht (15) zur Vermeidung der Oxidation unter einem Edelgas eingeschlossen ist, und auf dem Objektiv.

4. Visualisierungsvorrichtung nach Anspruch 1 oder 2, **dadurch gekennzeichnet, dass** die passiven Ausgleichsbauteile (12) vom kapazitiven oder induktiven Typ auf einem biegesteifen Träger (16) verbunden sind, auf welchem vorab der Bildsensorschaltkreis (3) gelötet ist, und welcher mit einem elektrischen Kabelbündel (17) verbunden ist, das in ein Kevlar- oder Kapton-Band getaucht ist und mit dem gedruckten Schaltkreis (5) der Kamera im Schaft (4) der Lampe verbunden ist.

5. Visualisierungsvorrichtung nach einem der vorhergehenden Ansprüche, **dadurch gekennzeichnet, dass** die elektrischen Verbindungskabel (10) einfache mehrdrahtige Kabel sind, mit sehr geringem linearen Widerstand, in einer Größenordnung von 0,002 Ohm pro Meter, um Abfälle der Versorgungsspannungen beim Bildsensor (3) der Kamera zu vermeiden.

6. Visualisierungsvorrichtung nach Anspruch 5, **dadurch gekennzeichnet, dass** die Verbindungskabellitze (10) für die Zeitgebersignale durch einen metallischen Mantel (18) elektromagnetisch abgeschirmt ist, beispielsweise in verflochtener Form, der mit der elektrischen Masse und/oder der mechanischen Masse des gedruckten Schaltkreises (5) und des Bildsensors (3) verbunden ist.

7. Visualisierungsvorrichtung nach einem der vorhergehenden Ansprüche, **dadurch gekennzeichnet, dass** die Beleuchtungsmittel aus einem einzigen Glüh- oder Halogenleuchtmittel (23) oder einer elektro-lumineszenz Diode bestehen, die im Schaft (4) der Lampe eingesetzt und Mitteln zur Führung des Lichtes zugeordnet ist.

8. Visualisierungsvorrichtung nach Anspruch 7, **dadurch gekennzeichnet, dass** die Mittel zur Führung des Lichtes, welches durch das Leuchtmittel (23) zum Kopf (2) der Lampe hin ausgesandt wird, aus einem Bündel von wenigstens zwei optischen Fasern (20), beispielsweise aus Plastik, bestehen, wobei das Leuchtmittel (19) am Eingang der optischen Fasern des Bündels angeordnet ist, an welches es über eine Luftkopplung gekoppelt ist.

9. Visualisierungsvorrichtung nach Anspruch 8, **dadurch gekennzeichnet, dass** die jeweiligen Enden einer jeden Glasfaser, entgegengesetzt zum Leuchtmittel (23), an einem streuenden Polymerring (21) vom nichtdurchsichtigen PMMA-Typ -Poly-Methyl-Methakrylat - angelegt sind, der dazu bestimmt ist, eine diffuse Beleuchtung vom Lambert-Typ im Blickfeld der digitalen Kamera symmetrisch in Bezug zur durchbrochenen Mitte des Ringes zu liefern, in welcher das Objektiv (6) des Bildsensors (3) angeordnet ist, und **dadurch**, dass eine kreisförmige Platte (22) aus durchsichtigem Polymer auf dem Ende des Kopfes (2) der Lampe geklebt ist.

10. Visualisierungsvorrichtung nach einem der vorhergehenden Ansprüche, **dadurch gekennzeichnet, dass**:
- der Kopf (2) der Lampe, in welchem der Bildsensor (3) untergebracht ist, auf der Grundlage eines steifen, hohlen, metallischen Körpers zum Schutze des Bildsensors verwirklicht ist, und zur elektrischen Isolierung mit einem nicht-leitenden Material, wie beispielsweise Plastik, bedeckt ist,
- der flexible Schlauch (19), der den Kopf mit einem Schaft (4) verbindet, einen geringeren Durchmesser aufweist als derjenige des Kopfes und aus Plastik besteht, um jeglichen elektrischen Kurzschluss während der Suche der Störung durch das Diagnostik-Werkzeug zu vermeiden, und
- der Schaft (4) aus einem steifen, metallischen Rohr besteht, das zu seiner elektrischen Isolierung plastifiziert ist.

11. Visualisierungsvorrichtung nach einem der Ansprüche 1 bis 10, **dadurch gekennzeichnet, dass** die digitale Miniaturkamera vom CCD- oder CMOS- oder CMOS-APS-Typ ist.

## Claims

1. A display device using a digital camera of endoscope type formed on the one hand by a miniature printed-circuit digital camera fitted into a torch and on the other hand a display screen (100) for the images produced by the camera,
the device having the following features:
- the image sensor (3) of the camera is accommodated in the hollow body of the head (2) of the torch (1);
- set off into the non-conducting handle (4) of the torch are on the one hand the electronic processing and clock control means (5) of the digital camera and on the other hand the means (23) for lighting the scene to be displayed;
- the screened electric cables (10) for making the connection between the image sensor (3) and its processing means (5) and guide means (20) for the light emitted by said lighting means towards the head (2) of the torch (1) are protected in the non-conducting flexible tube (19) connecting the head (2) of the torch to its handle (4); and
- means for compensating for the clock phases of the set-off image sensor (3) are added to the ends of the electric connecting wires (10) between the sensor (3) and its processing means (5), compensation for the clock phases of the image sensor (3) being effected by passive components (12),
the device being **characterised in that**
said passive components (12) are of capacitance or inductance type and are connected by soldering to the connecting lugs (7) of the image sensor (3).

2. A display device according to claim 1 **characterised in that** each of the connecting lugs (7) of the image sensor circuit (3) which is accommodated in the head (2) of the torch is directly soldered to a first end (8) of an electric connecting cable (10) whose second end (9) is connected to the printed circuit (5) of the video signal processing electronics disposed in the handle (4) of the torch.

3. A display device according to claim 1 or claim 2 **characterised in that**, to ensure rigidity of the assembly of the connections between the lugs of the image sensor (3) and on the one hand the connecting wires (10) and on the other hand the passive components (12), the connecting lugs are moulded into an insulating resin (13) except on its sensing face (14) of silicon, which is sealed under a rare gas by a glass layer (15) avoiding oxidation thereof and on the objective lens.

4. A display device according to claim 1 or claim 2 **characterised in that** the passive compensating components (12) of capacitance or inductance type are connected to a flexurally rigid support (16) to which the image sensor circuit (3) is previously soldered and which is connected to a harness (17) of electric wires embedded in a Kevlar or Kapton strip and connected to the printed circuit (5) of the camera in the handle (4) of the torch.

5. A display device according to any one of the preceding claims **characterised in that** the electric connecting cables (10) are simple multi-strand cables of very low linear resistivity of the order of 0.002 ohm per metre in order to avoid the drops in supply voltage at the location of the image sensor (3) of the camera.

6. A display device according to claim 5 **characterised in that** the strand of cables (10) for connection of the clock signals is electromagnetically screened by a metal sheath (18) in the form of braid for example connected to electrical earth and/or to the mechanical mass of the printed circuit (5) and the image sensor (3).

7. A display device according to any one of the preceding claims **characterised in that** the lighting means are formed by a single halogen or incandescent lamp (23) or by a light emitting diode disposed in the handle (4) of the torch and associated with light guide means.

8. A display device according to claim 7 **characterised in that** the light guide means for guiding the light emitted by the lamp (23) towards the head (2) of the torch are formed by a bundle of at least two optical fibres (20) of plastic for example, the lamp (19) being placed at the entry of the optical fibres of the bundle to which they are coupled by coupling in air.

9. A display device according to claim 8 **characterised in that** the respective ends of each of the optical fibres in opposite relationship to the lamp (23) are placed against a ring (21) of non-transparent diffusing polymer of PMMA - polymethylmethacrylate - type intended to produce diffuse lighting of Lambertian type in the field of view of the digital camera symmetrically with respect to the pierced centre of the ring in which the objective lens (6) of the image sensor (3) is placed and that a circular plate (22) of transparent polymer is glued on the end of the head (2) of the torch.

10. A display device according to any one of the preceding claims **characterised in that**:
- the head (2) of the torch in which the image sensor (3) is accommodated is made from a hollow rigid metal body to protect the image sensor and covered with a non-conducting material such as plastic material for electrical insulation thereof,
- the flexible tube (19) connecting said head to a handle (4) is of a smaller diameter than that of the head and made of plastic material to prevent any electrical short-circuit during the search for the failure by means of the diagnostic tool, and
- the handle (4) is made of a rigid metal tube plastic-coated for electrical insulation thereof.

11. A display device according to one of claims 1 to 10 **characterised in that** the miniature digital camera is of CCD or CMOS or CMOS-APS type.
